(19) Europäisches Patentamt / European Patent Office / Office européen des brevets

(11) **EP 2 991 274 B1**

## (12) FASCICULE DE BREVET EUROPEEN

(45) Date de publication et mention de la délivrance du brevet:
**01.02.2017 Bulletin 2017/05**

(21) Numéro de dépôt: **15182164.2**

(22) Date de dépôt: **24.08.2015**

(51) Int Cl.:
*H04L 12/24* *(2006.01)*  *H04L 29/08* *(2006.01)*
*H04L 12/911* *(2013.01)*

(54) **PROCÉDÉ D'EXÉCUTION DE SERVICES EN TEMPS RÉEL ADAPTATIF, NOTAMMENT DE GESTION DE VOL ET SYSTÈME TEMPS RÉEL METTANT EN OEUVRE UN TEL PROCÉDÉ**

VERFAHREN ZUR AUSFÜHRUNG VON DIENSTEN IN ADAPTIVER ECHTZEIT, INSBESONDERE FLUGSTEUERUNGSDIENSTE, UND ECHTZEITSYSTEM ZUR UMSETZUNG EINES SOLCHEN VERFAHRENS

METHOD FOR PERFORMING SERVICES IN ADAPTIVE REAL TIME, IN PARTICULAR FLIGHT MANAGEMENT AND REAL-TIME SYSTEM IMPLEMENTING SUCH A METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.09.2014 FR 1401937**

(43) Date de publication de la demande:
**02.03.2016 Bulletin 2016/09**

(73) Titulaire: **THALES**
**92400 Courbevoie (FR)**

(72) Inventeurs:
• **Coulmeau, François**
  **31036 TOULOUSE (FR)**
• **Sanchez, Frédéric**
  **31036 TOULOUSE (FR)**
• **Castet, Laurent**
  **31036 TOULOUSSE (FR)**
• **Deweerdt, Laurent**
  **31036 TOULOUSE (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
EP-A1- 2 945 062    EP-A2- 2 270 664
FR-A1- 2 920 236    US-A1- 2007 263 541

• IVERSON M A ET AL: "Statistical prediction of task execution times through analytic benchmarking for scheduling in a heterogeneous environment", HETEROGENEOUS COMPUTING WORKSHOP, 1999. (HCW '99). PROCEEDINGS. EIGHTH SAN JUAN, PUERTO RICO 12 APRIL 1999, LOS ALAMITOS, CA, USA,IEEE COMPUT. SOC, US, 1 janvier 1999 (1999-01-01), pages 99-111, XP010333333, DOI: 10.1109/HCW.1999.765115 ISBN: 978-0-7695-0107-9

• MARCO A S NETTO ET AL: "SLA-Based Advance Reservations with Flexible and Adaptive Time QoS Parameters", 17 septembre 2007 (2007-09-17), SERVICE-ORIENTED COMPUTING - ICSOC 2007; [LECTURE NOTES IN COMPUTER SCIENCE], SPRINGER BERLIN HEIDELBERG, BERLIN, HEIDELBERG, PAGE(S) 119 - 131, XP019100289, ISBN: 978-3-540-74973-8 * abrégé * * Item 2 *

EP 2 991 274 B1

**Description**

La présente invention concerne un procédé d'exécution en temps réel adaptatif, notamment de gestion de vol. Elle concerne également un système temps réel mettant en oeuvre un tel procédé. L'invention s'applique notamment dans les systèmes embarqués et plus particulièrement dans les systèmes avioniques.

Chaque système avionique temps réel est architecturé et développé pour répondre à des exigences de performances (taux de panne et qualité de service notamment) dans un cadre d'emploi défini. Chaque système, connecté à d'autres systèmes consomme des données et services mis à disposition par les autres systèmes et produit des données de services pour les autres systèmes. Ces interactions sont généralement figées statiquement lors de l'élaboration de l'architecture globale du « système de systèmes », c'est-à-dire lors de l'allocation de fonctions opérationnelles aux systèmes physiques. Ainsi, il est fréquent dans le monde avionique d'avoir plusieurs dizaines de systèmes répondant à l'ensemble des fonctions avion. Typiquement les opérations avion sont allouées aux systèmes selon une structuration logique, définie dans le document normatif de l'association ATA (Air Transport Association). L'architecture avion se décline donc en systèmes avioniques collaboratifs, chacun ayant une fonction bien déterminée, et des interactions avec les autres systèmes pour rendre le service opérationnel attendu. Les différentes fonctions sont réparties sur plusieurs calculateurs physiques, selon des choix des avionneurs, pour garantir les performances des missions.

Les systèmes embarqués sont qualifiés, avec un niveau de performance démontré, pour un environnement donné. Les interactions entre systèmes sont définis a priori lors de l'élaboration de l'architecture avion, et les systèmes sont développés et ajustés pour répondre au strict besoin d'interaction.

Si l'on se place du point de vue « client-serveur » où un ensemble de systèmes dits « clients » effectuent des requêtes vers un système particulier dit « serveur », se pose le problème de garantir aux clients la qualité de service en terme de précision et de temps de réponse, voire d'autres critères de performance, qu'ils attendent. Le problème est ainsi de rendre la qualité de service plus paramétrable vue d'un client pour qu'il n'ait pas à s'asservir tout le temps sur un cas pire, cas qui ne l'intéresse pas nécessairement.

Un problème est que l'ajout d'un nouveau client à un système donné engendre une requalification très coûteuse. Il faut en effet démontrer à nouveau la tenue de la performance opérationnelle de l'ensemble du système « serveur », même lorsqu'aucun nouveau service n'est attendu par le système « serveur ». Cela bride l'évolution des opérations avion.

Il existe donc un besoin de pouvoir permettre l'ajout de nouvelles connexions et de nouveaux clients à un système temps réel « serveur », en leur garantissant, dans tous les cas, un temps de réponse correspondant aux attentes du système client, quitte à adapter la qualité de service sur ce temps de réponse, et à fournir une qualité de service améliorée plus tard.

Un second besoin est de garantir le bon fonctionnement du système global qui ne dégrade pas ses performances et ne donne pas lieu à des modifications logicielles ou matérielles du serveur.

L'ajout d'un nouveau client ou d'une nouvelle connexion ne donnerait lieu qu'à une qualification du client en question et à une démonstration prouvant que la performance du réseau reste conforme aux exigences requises.

Un document FR 2 920 236 A1 divulgue un procédé et un dispositif de transmission de données géographiques sur un aéronef.

Un but de l'invention est notamment de répondre à ce besoin. A cet effet l'invention a pour objet un procédé d'exécution temps réel de services par une application dite « serveur » pour au moins une application dite « client », étape préliminaire établissant pour chaque service une liste de paramètres de calcul aptes à varier dans un domaine donné, dits ajustables, ainsi que des informations de temps de calcul et de qualité dudit service selon la valeur desdits paramètres, sur requête d'un client pour un service donné ledit procédé ajuste la valeur des paramètres de calcul ajustables en fonction d'une contrainte donnée, le service étant exécuté en utilisant les valeurs ajustées desdits paramètres.

Ladite contrainte donnée implique par exemple une durée maximale de temps de réponse à ladite requête, ou l'utilisation d'un jeu de paramètres de calcul non ajustables. Ladite contrainte est fournie au serveur par ledit client.

Dans un mode de mise en oeuvre particulier, pour chaque service, les paramètres ajustables sont classés par priorité, en cas d'ajustement nécessaire des paramètres pour répondre à ladite contrainte donnée :

- le paramètre de priorité la plus élevée est d'abord ajusté et le temps d'exécution dudit service étant calculé ;

- si l'ajustement dudit paramètre de priorité la plus élevée ne permet pas de répondre à la contrainte donnée, même en butée de son domaine de variation, le paramètre de priorité suivante est ajusté, la valeur du paramètre de priorité la plus élevée restant figée en butée de son domaine de variation ;

et ainsi de suite, par ordre de priorité jusqu'à répondre à la contrainte ou jusqu'à ce que tous les paramètres ajustables aient été mis en butée dans leur domaine de variation respectifs.

Dans un autre mode de réalisation possible, pour chaque service, les paramètres ajustables sont classés par priorité, en cas d'ajustement nécessaire des paramètres pour répondre à ladite contrainte donnée :

- le paramètre de priorité la plus élevée est d'abord ajusté jusqu'à une première valeur cible à l'intérieur de son domaine de variation et le temps d'exécution dudit service étant calculé ;

- si l'ajustement dudit paramètre de priorité la plus élevée ne permet pas de répondre à la contrainte donnée, même en butée de ladite première valeur cible, le paramètre de priorité suivante est ajusté jusqu'à une deuxième valeur cible à l'intérieur de son domaine de variation, la valeur du paramètre de priorité la plus élevée restant figée en butée de la première valeur cible ;

et ainsi de suite, par ordre de priorité jusqu'à répondre à la contrainte ou jusqu'à ce que tous les paramètres ajustables aient été mis en butée, si l'ajustement n'est pas suffisant après avoir atteint toutes les valeurs cibles en butée, de nouvelles valeurs cibles internes aux domaines de variations desdits paramètres étant définies.

Les paramètres d'un sous-ensemble de ladite liste sont par exemple d'abord ajustés.

Ladite liste des paramètres ajustables est par exemple établie par ledit client. Lesdits domaines de variation desdits paramètres sont par exemple déterminés par ledit client.

Dans un mode de réalisation possible, au moins un résultat intermédiaire d'exécution dudit service est calculé avec sa qualité se service. Ledit résultat intermédiaire est par exemple notifié audit client. L'exécution complète dudit service est par exemple effectuée après ledit calcul intermédiaire.

Dans un autre mode de réalisation possible plusieurs résultats intermédiaires successifs sont par exemple calculés, avec des paramètres de moins en moins ajustés à chaque calcul, jusqu'au calcul complet d'exécution dudit service sans ajustement desdits paramètres, un paramètre de moins en moins ajusté étant un paramètre dont la valeur s'éloigne de plus en plus de la valeur permettant de répondre à ladite contrainte donnée.

Les paramètres de ladite liste sont par exemple ajustés à chaque réception de nouvelle requête.

L'exécution de ladite requête est par exemple refusée si son exécution avec lesdits paramètres ajustables ne permet pas de répondre à ladite contrainte donnée. Une information est par exemple transmise audit client si l'exécution de ladite requête avec lesdits paramètres ajustables ne permet pas de répondre à ladite contrainte donnée.

L'invention a également pour objet un système temps réel mettant en oeuvre le procédé selon l'une quelconque des revendications précédentes, comportant au moins un module physique où est implanté le serveur, caractérisé en ce que les clients sont des applications externes implantées dans ledit module physique, lesdits clients communiquant avec le serveur via une mémoire interne au module. Les clients sont par exemple des applications externes réparties dans d'autres modules physiques et communiquant avec le serveur via un protocole réseau, le serveur exécutant par exemple une application de gestion de vol.

D'autres caractéristiques et avantages de l'invention apparaîtront à l'aide de la description qui suit, faite en regard de dessins annexés qui représentent :

- La figure 1, une présentation de l'architecture fonctionnelle d'un système de gestion de vol embarqué ;
- Les figures 2a et 2b, des caractéristiques de fonctionnement de systèmes temps réel ;
- La figure 3, différentes étapes possibles pour la mise en oeuvre du procédé selon l'invention ;
- La figure 4, un exemple de réalisation d'une première étape ;
- La figure 5, les sous-étapes possibles de la deuxième étape ;
- La figure 6, les sous-étapes possibles de la deuxième étape;
- La figure 7, un exemple de représentation physique des clients dans le cas d'application à un système FMS.

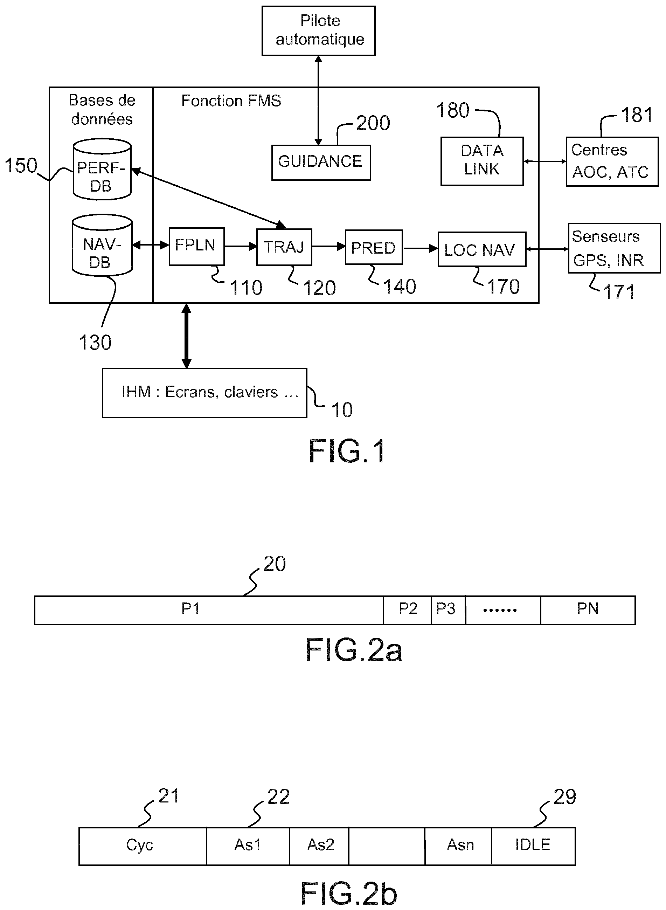

La figure 1 présente l'architecture fonctionnelle d'un système de gestion de vol embarqué, dit FMS (Flight Management System). Cette architecture standard, bien connue, répond à la norme ARINC 702A. Une des fonctions du FMS est de localiser l'avion en utilisant ses senseurs 171 (centrales inertielles, GPS, balises radioélectriques notamment). Cette fonction est réalisée par une fonction de localisation LOC NAV 170. Le système comporte les fonctions et composants suivants :

- Une fonction de vol FPLN 110, pour saisir les éléments géographiques constituant le squelette de la route à suivre (procédure de départ et d'arrivée, points de passages ...) ;

- Une base de donnée de navigation NAVDB 130, pour construire des routes géographiques et des procédures à partir de données incluses dans les bases (points, balises, legs d'interception ou d'altitude...) ;

- Une base de données de performance, PRF DB 150, contenant les paramètres aérodynamiques et moteurs de l'appareil ;

- Une fonction de trajectoire latérale TRAJ, 120 : pour construire une trajectoire continue à partir des points du plan de vol, respectant les performances avion et les contraintes de confinement (RNP) ;

- Une fonction de prédictions PRED, 140 : pour construire un profil vertical optimisé sur la trajectoire latérale ;

- Une fonction de guidage, GUID 200, pour guider dans les plans latéraux et verticaux l'aéronef sur sa trajectoire 3D, tout en optimisant la vitesse ;

- Liaison de donnée numérique DATALINK, 180 pour communiquer avec les centres de contrôle 181 et les autres aéronefs.

A partir des informations géographiques contenues dans la base de données de navigation 130, le pilote peut construire sa route, appelée plan de vol et comportant la liste de points de passage appelés « waypoints », fonction assurée par la fonction de plan de vol 110. Le FMS peut gérer plusieurs plans de vol. L'un d'entre eux, connu sous l'acronyme « Active » dans l'ARINC 702A désigne le plan de vol sur lequel l'avion est guidé. Il existe des plans de vol de travail, parfois appelés « plans de vol secondaires » ou « inactifs », ainsi que des plans de vol transitoires.

La fonction 120 calcule la trajectoire latérale en fonction de la géométrie entre les points de passage, appelés couramment LEG, et/ou les conditions d'altitude et de vitesse qui sont utilisées pour le calcul du rayon de virage. Sur cette trajectoire latérale, le FMS optimise une trajectoire verticale, en altitude et en vitesse, passant par des contraintes éventuelles d'altitude, de vitesse, de temps, en utilisant une modélisation des performances aérodynamiques et moteurs contenues dans la base de données de performances 150.

Connaissant la localisation de l'avion et la trajectoire 3D, le FMS peut asservir l'avion sur cette trajectoire, cet asservissement étant effectué par la fonction de guidage 200. L'ensemble des informations entrées ou calculés par le FMS est regroupé sur des écrans d'affichage ou autre IHM 10. La communication avec le sol, notamment avec la compagnie aérienne et le contrôle aérien, est réalisée par la liaison de données numériques 180. Dans la terminologie FMS, on utilise le terme « révision » pour caractériser une insertion, une modification ou un effacement de données du système FMS, le mot édition étant également utilisé.

Dans les architectures actuelles (quel que soit l'avion), la partie « Flight Planning » et « trajectoire optimisée » est en général incluse dans un calculateur dédié appelé « FMS » pour « Flight Management System » (ou calculateur de gestion du vol). Ces fonctions constituent le coeur de métier FM.

Ce système peut héberger également une partie de la « Localisation » et du « Guidage ».

Afin d'assurer sa mission, le FMS est connecté à de nombreux autres calculateurs (une centaine).

Deux grands clients interagissent habituellement avec le système FMS :

- L'Interface Homme Machine (dite HMI, acronyme anglo saxon de « Human Machine Interface ») qui permet aux opérateurs (équipage) d'interagir avec le FMS
- L'interface CMU (pour Communication Management Unit) qui permet à un opérateur sol (compagnie aérienne, contrôle aérien) d'interagir avec le FMS : Ce calculateur CMU est client des données FMS et peut demander la modification de la mission (i.e. insérer des « révisions » dans le FMS).

Par « interaction » on entend « requête » envoyée au FMS, avec un retour attendu, par opposition à l'« information » qui consiste à ce que des systèmes tiers s'abonnent aux données émises périodiquement ou sur événement par le FMS.

Les opérations futures dans l'avion vont pourtant nécessiter que des systèmes tiers interagissent avec le FMS, soit :

- En utilisant des services publics existants

- En utilisant des services privés existants

- En utilisant de nouveaux services à implémenter dans le FMS.

On peut citer par exemple :

- Initialisation du plan de vol FMS par un calculateur externe (tablette tactile, Ipad®, EFB pour « Electronic Flight Bag »)

- Intégration du « plan de vol » du FMS avec le « plan de roulage » du calculateur de roulage sol (appelé ANF pour Airport Navigation Function, AOF pour Airport Onboard Function ou TAXI ou AMM pour Airport Moving MAp)

- Optimisation de la mission, appelée par un client sol (outil compagnie par exemple) ou bord (tablette, EFB) via des requêtes de calcul FMS

- La mise à jour du logiciel FMS (en particulier ses bases de données de Navigation, à cycle de 28 jours) par un équipement tiers (tablette, outil de maintenance, EFB)

- Utilisation de requêtes FMS par un système de surveillance du terrain du trafic, de la météo pour filtrer des alertes, ou les confirmer, ou optimiser des ajustements latéraux et verticaux (ex : évitement d'une masse nuageuse mobile détectée par un Radar Météo)

  o Le système de surveillance trafic est connu sous l'acronyme TCAS (Traffic Collision Avoidance System) ou Traffic Computer

  o Le système de surveillance terrain est connu sous l'acronyme TAWS (Terrain Avoidance Warning System) ou GPWS (Ground Proximity warning system)

o Le système de surveillance météo est connu sous l'acronyme WxR (Weather Radar)

• Utilisation de requêtes FMS pour aider au déclenchement d'évènements sur un système tiers (ex : Modification de la fréquence radio par le système RMS (Radio Management System) quand on s'approche d'un point de changement de région

• Vérification de conformité de la trajectoire latérale et/ou verticale calculée par le FMS, par rapport aux cartes aéronautiques numérisées fournies à l'équipage (stockées dans une tablette, un EFB par exemple)

• Utilisation du système FMS pour connaitre des prédictions sur un horizon de temps donné selon des modes de conduite du vol (guidage) et d'état avion définis (ex : Pilote automatique souhaitant connaître le taux de montée moyen sur 2000 pieds d'évolution d'altitude avec 1 moteur en panne ; calculateur de carburant souhaitant comparer la consommation moyenne avec les prédictions FMS de consommation...)

• Interactions avec le FWS (Flight Warning System) pour présenter des résultats de vérifications, proposer des lancements de DO LIST automatisés, modifier directement des états FMS sur confirmation de pannes.

• Passagers connectés via leur interface cabine (IFE pour In Flight Entertainment), souhaitant connaître les prédictions en temps, vitesse pour leur destination

• Utilisation du FMS via un AID (Agent d'Interaction Domaine) ou une IHS (Interface Homme Système) intégrée qui concentre et organise les échanges entre calculateurs.

Ainsi, une dizaine de nouveaux clients sont susceptibles d'interagir avec le FMS (EFB, WIMS, TCAS, TAWS, WxR, PA, FQMS, IFE), bref la plupart des systèmes des différents ATA. Dans l'avenir, il est possible qu'un nombre encore supérieur de clients souhaite interagir avec la « gestion du vol ».

Or, on ne connaît pas à priori la cadence des requêtes des différents systèmes, ni le moment où la requête sera demandée, ni le volume de données que cela représente. Si un nouveau système se connecte, on ne connaît pas a priori ses intentions (type de requêtes, périodicité).

Le procédé selon l'invention, décrit par la suite, permet d'être capable de se positionner face à un nombre inconnu de requêtes arrivant à des instants aléatoires, tout en garantissant une réponse dans le temps imparti à chacun, moyennant une précision/fiabilité réduite par ajustement des paramètres de service.

L'invention est décrite pour un système avionique, mais elle applicable à toute architecture de systèmes temps réel embarqués.

Les figures 2a et 2b présentent des caractéristiques de fonctionnement de ces systèmes. La figure 2a présente une trame exécutée par chaque processeur d'un calculateur, cette trame étant connue sous le terme de MIF selon l'expression anglo-saxonne « Minor Frame ». Plus particulièrement, chaque processeur exécute son code sur des créneaux temporels successifs, ces créneaux étant des MIF. Chaque MIF est découpée de manière statique ou dynamique, suivant les technologies, en partitions temporelles, c'est-à-dire en créneaux temporels 20 sur lesquels une fonction s'exécute. Dans l'exemple de la figure 2a, la MIF comporte N créneaux P1, P2, P3 ... PN.

Cette technologie est largement déployée sur les modules dits IMA (pour « Integrated Modular Avionics ») en aéronautique. Elle permet d'héberger sur un même calculateur physique plusieurs fonctions entraînant des gains en masse et en puissance électrique.

Dans la plupart des systèmes temps réels embarqués, le partitionnement est statique afin d'assurer le déterminisme des temps de réponse globaux du système. De la même manière, les modules IMA allouent, de manière statique en général, les mémoires physiques RAM et ROM qu'utilisera chaque fonction. Cela permet de bien séparer les différentes fonctions qui s'exécutent au sein d'un même module et de mieux maîtriser les problèmes de pannes.

La figure 2b illustre l'exécution temps réel d'une fonction temps réel au niveau d'une partition d'une MIF. La figure 2b représente une succession de traitements 22 classés par priorités, le traitement As2 pouvant s'exécuter avant le traitement As1 mais pouvant être interrompu par As1 qui prend la main car sa priorité est plus élevée, et de même pour Asi-1 par rapport à Asi. En général, le système commence par exécuter les traitements 21 dits « cycliques » de la fonction. Il s'agit de traitement qui doivent s'exécuter à chaque MIF sans être interrompus, ces traitements concernant notamment des gestions d'entrée et de sorties ou encore le calcul d'informations qui doivent être rafraîchis à chaque cycle. Ces traitements ont une priorité plus élevée car il faut garantir qu'ils auront le temps de s'exécuter tout le temps. Ce sont en fait des tâches comme les autres, mais auxquelles on a en général associé une priorité élevée pour garantir qu'ils passent avant les autres traitements.

Après le traitement cyclique 21, viennent les traitements asynchrones 22. En temps réel, il s'agit de traitements qui s'exécutent sur requête (événements, réveil périodique ...). Les événements sont en général générés par les systèmes périphériques connectés au système principal. Ils sont ordonnés par priorité de traitement. Ainsi sur la figure 2b, on visualise une succession de traitements asynchrones 21, l'événement As1 étant suivi de l'événement As2, lequel est suivi de l'événement As3 et ainsi de suite jusqu'au dernier événement Asn. Si on note P(Asi) la priorité d'un événement, il vient :

$$P(As1) > P(As2) > P(As3) > \dots P(Asn)$$

Si le premier traitement As1 nécessite tout le temps de calcul restant sur la MIF, les autres traitements ne pourront s'exécuter au mieux que sur la MIF suivante. Si la somme des traitements cyclique 21 et asynchrones 22 devant s'exécuter ne dépasse pas la durée de la MIF, il reste du temps libre 29 que l'on appelle IDLE.

Les temps de réponse perçus par l'extérieur du système, c'est-à-dire perçus par les systèmes périphériques ou par l'humain, pour un traitement global donné, sont donc proportionnels au nombre de MIF nécessaires pour exécuter la totalité du traitement. Ainsi sur une MIF de 80 ms où le traitement cyclique prend 30 ms, si un traitement nécessite 1 seconde de temps processeur pour exécuter son calcul, il faudra au mieux 20 MIF pour le terminer, 20 MIF correspondant à 20 x 50 ms = 1 seconde où 50 ms est le temps restant dans une MIF après le traitement cyclique de 30 ms. Le temps de réponse sera donc de 20 x 80 ms = 1,6 seconde. Si le traitement entre en concurrence avec d'autres traitements asynchrones plus prioritaires que lui, le nombre de MIF nécessaire augmente et donc le temps de réponse perçu par l'extérieur.

Cela montre notamment que toute la difficulté pour les industriels du domaine pour bâtir une architecture temps réel est d'ordonnancer les traitements sur des tâches de priorités adaptées pour tenir l'ensemble des temps de réponses des traitements exigés, en prenant en compte la concurrence des traitements avec une probabilité de tenue respectée. En général, les systèmes doivent garantir qu'ils tiennent leurs exigences de performance 100% du temps, en « mono-événement », c'est-à-dire sans superposition d'événements concurrents. Et on mesure la probabilité que cela ne soit plus le cas en « multi-événements » concurrents, cette probabilité devant être la plus faible possible. On peut ainsi exiger que le système soit dimensionné pour tenir l'ensemble des temps de réponse dans 99% du temps. Cette probabilité peut également être différente entre les traitements selon leur criticité, c'est-à-dire selon leur impact sur la tenue de l'opération globalement.

Lorsque l'on connaît le nombre de clients pouvant demander un traitement asynchrone, la fréquence maximum de leurs requêtes et la durée CPU de calcul correspondant au traitement des requêtes par le serveur, il existe des techniques connues de l'état de l'art pour créer et ordonnancer les tâches temps réel d'une ressource donnée, afin de répondre à ces exigences de temps de réponse avec la probabilité requise. En revanche, lorsque le nombre de clients est a priori inconnu, que la cadence de leurs requêtes est inconnue a priori, comme c'est le cas dans une architecture ouverte banalisée multi-clients, se pose le problème de pouvoir garantir aux clients un maximum de réponses positives. Il n'est pas souhaitable en effet que l'engorgement se traduise par des « rejets » de requêtes trop nombreuses. De plus, les clients qui effectuent des requêtes au serveur n'ont pas forcément tous besoin de la même qualité de service. Par exemple, certains clients peuvent souhaiter une précision sur un algorithme plus ou moins élevée, une profondeur de calcul sur une intégration ou une optimisation différente, ou une recherche sur des éléments d'une base de données plus ou moins exhaustive. La qualité de service pourra être également être nommé par la suite par le terme QoS.

L'invention utilise avantageusement un estimateur de temps de calcul pour chaque service, cet estimateur modélisant l'impact sur le temps de calcul d'au moins un paramètre ajustable utilisé par le service. On peut ainsi déterminer, avec un nombre de services en attente dans la pile, l'ordonnancement qui maximise le nombre de réponses aux clients en maximisant également le niveau de qualité de service à chaque client, cela connaissant le système dans son domaine d'usage. L'invention consiste notamment à déterminer l'ajustement du ou des paramètres, permettant d'obtenir une durée de service dite $T_{service}$, compatible du temps de réponse attendu par le client. Elle permet ainsi d'estimer l'échéance à laquelle le serveur pourra répondre au client, connaissant cette durée $T_{serice}$, et connaissant la durée moyenne CPU d'un traitement unitaire parmi les services proposés et l'état de la pile de requêtes en cours de traitement et d'attente. Cela permet d'avoir des stratégies d'ajustement à plusieurs paramètres (multi-paramètres) et à plusieurs requêtes (multi-requêtes), minimisant le nombre de requêtes rejetées.

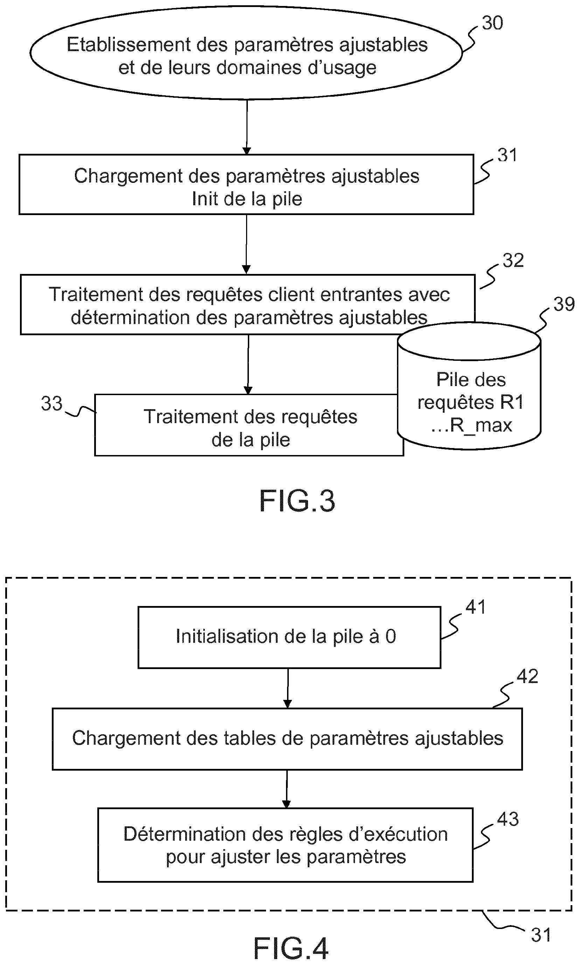

La figure 3 présente les étapes possibles du procédé selon l'invention. Une étape préliminaire 30 effectue l'établissement des paramètres ajustables et de leurs domaines de variation. Cette étape préliminaire peut être réalisée « off line ».
Dans cette étape, on calcule le temps d'exécution de chaque service proposé par le serveur. On notera par la suite S(i) le service d'ordre i, i variant de 1 à Nb_services, où Nb_services est le nombre de services. Le temps d'exécution est notamment fonction des paramètres liés au service, un paramètre lié au service S(i) étant noté param(i, j), j variant de 1 à NP(i), où NP(i) est le nombre de paramètres liés au service S(i).

Pour calculer ce temps d'exécution, le procédé peut par exemple effectuer une campagne de mesures des temps de calcul du système, sur un jeu de scénarios représentatifs ou à l'aide d'une modélisation des performances du système serveur.
Pour chaque service S(i), on dispose en entrée des chaînes de traitements correspondant à ce service. Une chaîne de traitement entre un événement déclencheur E(i) et une sortie attendue O(i) est notée {(E(i), O(i)}.
Le procédé détermine un domaine de variation pour chaque paramètre param(i, j) entre deux bornes Min (param(i, j)) et Max (param(i, j)), où :

- Min (param(i, j)) correspond à la dégradation la plus forte possible des performances du serveur, permettant de gagner le plus de temps de calcul ;
- Max (param(i, j)) correspond à l'absence de dégradation, c'est la valeur du paramètre nominal de calcul.

Le temps d'exécution dépend des valeurs du paramètre entre ces bornes. Selon l'invention, un paramètre ajustable est un paramètre apte à varier entre les bornes de son domaine de variation, la variation du paramètre influençant le temps de calcul et les performances du serveur, ces performances correspondant par exemple à la précision et/ou la fiabilité des calculs.

On présente ci-dessous quelques exemples de paramètres, pour :

- des calculs d'intégration numérique ;
- des calculs utilisant des nombres flottants ;
- une linéarisation des calculs pour des fonctions non linéaires ;
- des calculs de consultation de bases de données ;
- des calculs de trajectoires ;

cette liste n'étant pas exhaustive.
Pour les calculs d'intégration numérique :

o Des paramètres sont pas d'intégration et l'ordre de la méthode pour le calcul intégré : les intégrations numériques s'effectuant par une discrétisation du problème, la taille du pas d'intégration influe directement sur le temps de calcul, de même que l'ordre de la méthode choisie (un Runge-Kutta d'ordre 4 coûte plus cher qu'une méthode de Newton d'ordre 2 par exemple) ;

■ Plus le pas d'intégration est grand, plus la précision/fiabilité du calcul est dégradée ;

■ Plus l'ordre de la méthode est faible, plus la précision/fiabilité du calcul est dégradée ;

o Un autre paramètre est le nombre d'itérations pour des calculs itératifs : les optimisations numériques utilisent en grande majorité des méthodes itératives où le procédé approche petit à petit la solution optimale, jusqu'à atteindre un critère d'arrêt fonction de la précision attendue. Le procédé pourra jouer sur le nombre maximum d'itérations ;

■ Plus le nombre maximum d'itérations est faible, plus la précision/fiabilité du calcul est dégradée ;

o Un autre paramètre est le nombre d'éléments calculés : les intégrations numériques d'une trajectoire partent typiquement d'un état x0 pour attendre un état final xf en calculant la commande u(t) le long du temps. Si le calcul s'arrête en un point intermédiaire u(t_int), le temps de calcul est diminué ;

■ Par exemple sur un calcul de trajectoire, un client peut avoir besoin uniquement de l'intégration sur les quelques éléments devant l'état initial. Les prédictions temps/carburant d'un GPS ou d'un système de gestion du vol peuvent intéresser un client sur quelques dizaines de kilomètres par exemple ;

■ Plus la profondeur temporelle du calcul est faible, moins le client dispose d'éléments sur la trajectoire complète.

Pour les calculs utilisant des nombres flottants, le procédé peut utiliser des calculs en 16 bits ou 32 bits au lieu de 64 bits, la mantisse est un paramètre :

o Plus la mantisse du flottant est faible, plus la précision/fiabilité du calcul est dégradée.

Pour la linéarisation des calculs pour des fonctions non linéaires : le procédé peut remplacer les fonctions par leur développement limité à un ordre donné (l'ordre jouant sur la précision), cet ordre étant un paramètre :

o Plus l'ordre est faible, plus le calcul est rapide, plus la précision/fiabilité est dégradée.

Pour les calculs de consultation de base de données :

o Autre paramètre, la précision attendue sur le résultat en cas d'interpolation dans une base de données ;

■ Plus la précision est relâchée sur le critère d'arrêt, plus l'interpolation est rapide mais plus la précision/fiabilité est dégradée ;

o La taille de la liste retournée par le service de consultation est également un paramètre ;

■ par exemple pour un service GPS demandant de retourner tous les éléments ayant une caractéristique donnée (stations services notamment) : le procédé peut limiter le nombre d'éléments retournés en partant de la position du véhicule

■ pour un système de gestion de la trajectoire avion, l'ensemble des balises de radionavigation VOR/DME autour de l'avion : le procédé peut limiter le nombre d'éléments retournés en partant de la position de l'aéronef, ou de la position d'un point que consulte l'équipage (ex : autour de l'aéroport de destination etc ...)

■ Plus la liste est limitée, et moins le client dispose d'éléments de choix en retour du service.

Pour les calculs de trajectoire sol, on peut citer :

o L'utilisation d'un modèle plus ou moins simple, par exemple un ellipsoïde du modèle GPS connue sous l'acronyme WGS84 plus gourmand qu'une approximation sphérique du géoïde terrestre, lui-même plus gourmand qu'une projection Mercator local (mise à plat du géoïde) ;

■ Plus la modélisation est simple, plus la précision/fiabilité est dégradée ;

o Les algorithmes de trajectoire calculant le « fil » continu de la trace sol, le procédé selon l'invention pouvant utiliser des « transitions entre droites » avec des virages à rayon constant, voire éliminer les virages du calcul (la trajectoire devient de classe C0) ;

■ Plus la modélisation est simple, plus la précision/fiabilité est dégradée.

Le procédé est applicable aux autres domaines, du moment qu'ils utilisent des paramètres ajustables jouant sur la qualité du calcul obtenu, notamment en termes de précision, fiabilité ou temps de calcul comme dans les exemples ci-dessus.
La campagne de mesure calcule les temps de réponse de bout en bout d'une chaîne de traitements, dite encore chaîne fonctionnelle, en faisant varier les paramètres selon deux options :

- Option 1 : On ne fait varier qu'un paramètre, les autres étant fixés, et on construit ainsi petit à petit un modèle de performance reliant temps de réponse et précision/fiabilité (par comparaison avec un calcul utilisant les paramètres « nominaux ») ;

- Option 2 : on effectue des tirages aléatoires sur les paramètres ajustables, en nombre suffisamment grand pour disposer des propriétés de la loi des grands nombre (algorithme de Monte-Carlo par exemple).

Ainsi, pour chaque chaîne {E(i), O(i)}, on dispose, par exemple dans une base de données embarquée dans le système hébergeant les clients et le serveur :

- d'une estimation du temps de calcul, ou durée du service S(i) correspondant,
$$T_{service(S(i),param(i,1),...,param(i,Np(i)))}$$
- d'une qualité de service associée par rapport à la qualité optimale, en ce qui concerne notamment la précision, la fiabilité ou la profondeur de calcul.

Le procédé peut donc à tout instant :

- calculer l'estimation de temps de calcul à partir d'un jeu de paramètres ajustés ;
- à l'inverse, calculer un jeu de paramètres ajustés pour tenir un temps de calcul objectif Tobj(S(i)) donné, le calcul pouvant donner plusieurs solutions, éventuellement sélectionnables par le client selon des règles de priorité.

On revient à la figure 3. L'étape préliminaire 30 est suivie d'une première étape 31, dans laquelle on effectue l'initialisation de la pile des requêtes et le chargement des paramètres ajustables.
La figure 4 illustre cette première étape 31 qui comporte trois sous-étapes 41, 42, 43.
Dans une première sous-étape 41, la pile des requêtes est initialisée à zéro, elle est vide.
Dans une deuxième sous-étape 42, le procédé charge une table de paramètres ajustables, éventuellement plusieurs tables, avec :

- leur domaine d'usage ;
- le temps de calcul selon les valeurs de paramètres ajustables, selon l'étape préliminaire 30.

Dans un premier mode de réalisation, le serveur est seul dépositaire de la table des ajustements et l'utilise pour ajuster les paramètres en fonction de requêtes S(i) des clients et notamment des contraintes imposées. Cette implémentation a notamment comme avantage que les clients n'ont pas besoin d'implémenter des logiques pour ajuster les paramètres. Ils fournissent éventuellement leur temps de réponse attendu Trep(i) que le serveur transformera en temps de calcul Tobj(i), sur lequel il effectuera les ajustements via les règles d'exécution de la sous-étape suivante 43.
Dans un autre mode de réalisation possible, le client a une vue sur la table des ajustements et sollicite le serveur en fournissant soit un temps de réponse Trep(i), soit une liste de paramètres ajustables et non ajustables :

- si un temps Trep(i) est fourni, le serveur détermine les paramètres à ajuster selon les règles établies dans la sous-étape suivante 43 ;
- si une liste de paramètres ajustables et non ajustables est fournie en plus du temps de réponse Trep(i), le serveur détermine les paramètres à ajuster selon des règles dites A3 ou A4 qui sont définies dans la sous-étape suivante 43 ;
- si une liste de paramètres ajustables et non ajustables est fournie sans exigence de temps de réponse Trep(i), le serveur détermine les paramètres à ajuster selon des règles dites A0 à A4 de la sous-étape suivante 43, en se fixant son propre objectif de temps, afin de satisfaire plusieurs clients.

Ce mode de réalisation a notamment comme avantage que les clients maîtrisent mieux les paramètres sur lesquels ils souhaitent agir et ceux qu'ils souhaitent préserver.

Dans la sous-étape suivante 43, la troisième sous-étape, le procédé détermine les règles d'exécution pour ajuster les paramètres.

Dans une implémentation possible dite « A0 », la règle est telle que les paramètres ajustables sont classés par priorité entre eux. On définit ainsi pour chaque service S(i), une table de priorité de paramètres P(i, kp), p variant de 1 à N tels que :

$$P(i,k1) > P(i,k2) > \ldots > P(i,kN)$$

- Lorsqu'un ajustement est nécessaire, le procédé agit d'abord sur param(i,k1), et détermine le temps de traitement $T_{service(S(i),param(i,1),\ldots,param(i,k1),\ldots,param(i,Np(i)))}$ correspondant, par rapport à l'objectif de temps de calcul Tobj(S(i)) ;

- Si l'ajustement du paramètre param(i,k1) n'est pas suffisant, c'est-à-dire même en butée à la valeur minimale Min(Param(i,k1)), le temps de calcul requis est supérieur à l'objectif, alors le procédé agit sur le paramètre param(i,k2), le paramètre Param(i,k1) étant figé à sa valeur minimale ;

  o Et ainsi de suite, jusqu'à ce que l'objectif Tobj(S(i)) soit atteint ou que tous les paramètres aient été mis en butée à leur Min(Param(i, j) par le procédé ;

Un avantage est ici la simplicité et déterminisme de la solution vis à vis des clients

Dans une autre implémentation possible dite « A1, selon une autre règle les paramètres sont ajustés au fur et à mesure (par rapport à l'implémentation A0, cette alternative discrétise les gammes des paramètres) :

- Lorsqu'un ajustement est nécessaire, le procédé agit d'abord sur param(i,k1) jusqu'à une valeur cible V_cible(i,k1) comprise entre Max(Param(i,k1)) et Min(Param(i,k1)), et détermine le temps de traitement $T_{service(S(i),param(i,1),\ldots,param(i,k1),\ldots,param(i,Np(i)))}$ correspondant, par rapport à l'objectif de temps de calcul Tobj(S(i)) ;

- Si l'ajustement du paramètre param(i,k1) n'est pas suffisant, le procédé agit sur param(i,k2) jusqu'à sa butée V_cible(i,k2) ;

  o et ainsi de suite, jusqu'à ce que l'objectif Tobj(S(i)) soit atteint ou que tous les paramètres aient été mis en butée à leur V_cible(i,ki) par le procédé ;

- Si l'ajustement des paramètres n'est pas suffisant, le procédé recommence en définissant de nouvelles valeurs cibles V_Cible(i,ki) ;

  o à la fin des fin, les valeurs V_cible peuvent se retrouver toutes en butée à leur minimum.

Un avantage est notamment une action plus progressive et mieux répartie sur l'ensemble des paramètres, qui contribuent tous à l'effort de diminution du temps de calcul.

Dans une autre implémentation possible dite « A2 », selon une autre règle, un sous ensemble des paramètres est ajusté d'abord avant d'agir sur un autre sous-ensemble de paramètres, solution qui mixte l'implémentation A0 et l'implémentation A1 :

  Un avantage est que cette alternative A2, plus souple encore, permet de préserver les paramètres les plus importants pour le client, en agissant d'abord sur les autres, tout en évitant la dégradation trop brutale d'un paramètre d'ajustement.

Dans une autre implémentation possible, dite « A3 », les paramètres à ajuster et les paramètres à préserver sont choisis par le client, selon un des modes « A0 », « A1 » ou « A2 » (le client choisit éventuellement le mode, ainsi que les paramètres).

Un avantage de cette alternative, plus souple encore, est qu'elle permet au client d'ajuster ses demandes pour préserver les paramètres qui l'intéressent.

Dans une autre implémentation possible dite « A4 », selon une autre règle, les paramètres à ajuster ainsi que les bornes d'ajustement (valeurs cibles maximum Max(V_Cible)), sont choisis par le client selon un des modes « A0 », « A1 », « A2 » ou « A3 ».

Cette alternative a notamment comme avantage qu'elle est la plus souple pour les clients : Elle permet au client d'ajuster ses demandes au mieux.

D'autres alternatives sont possibles, mixant les besoins clients et les contraintes du serveur. Toute autre combinaison est possible, sans que cela ne restreigne la portée de l'invention.

Concernant l'ajustement dynamique, une règle d'exécution dite « D1 » peut autoriser le procédé à ajuster dynamiquement les paramètres qui avaient été calculés pour les services en cours, afin de permettre l'insertion d'un nouveau service.

Une alternative dite « D2 » peut interdire l'ajustement dynamique de telle façon qu'une fois la liste des paramètres ajustable calculée, le procédé ne la modifie plus.

Concernant l'acceptation et/ou le rejet de requêtes, une règle alternative dite « R1 » peut rejeter toute requête dont le temps de réponse objectif ne peut être tenu.

Dans une alternative dite « R2 », le procédé peut rejeter une requête si les paramètres ajustables ou non ajustables demandés par le client ne permettent pas de répondre au temps objectif fixé par le serveur.

Dans une règle alternative dite « R3 », le procédé ne rejette pas de requête mais avertit le client si les paramètres ajustables/non ajustables ou le temps de réponse objectif ne peuvent être tenus.

Concernant l'aspect progressif de la qualité de service, dans une implémentation possible dite « Q1 », le procédé effectue un calcul complet si nécessaire (i.e. sans ajustement), après un calcul intermédiaire.

Dans une autre implémentation possible, dite « Q2 », le procédé effectue plusieurs calculs intermédiaires successifs avec une qualité de service qui augmente à chaque fois, c'est-à-dire avec des paramètres de moins en moins ajustés, jusqu'au calcul complet sans ajustement de paramètres.

Pour ces différentes alternatives « Ai », le procédé, dans une implémentation possible, choisit comme paramètre ajustable un « timeout » client, c'est-à-dire un temps de réponse attendu par le client :

- Si la valeur du « timeout » est 0, il n'y a donc pas de « timeout » si le serveur n'a pas le temps d'exécuter pour répondre au temps de réponse de base, dans ce cas le procédé rejette la requête selon une des alternatives « Ri » ci-dessus ;
- Si la valeur est finie, donnée en millisecondes, on ne tient pas compte du temps de réponse de base et on contrôle par rapport à la valeur d'entrée pour accepter ou rejeter la commande, selon une alternative « Ri » ;
- Si la valeur est infinie, le procédé attend que le traitement soit terminé quel que soit le temps de traitement.

On revient à la figure 3. Dans une deuxième étape 32, le procédé effectue le traitement des requêtes entrantes avec la détermination des paramètres ajustables.

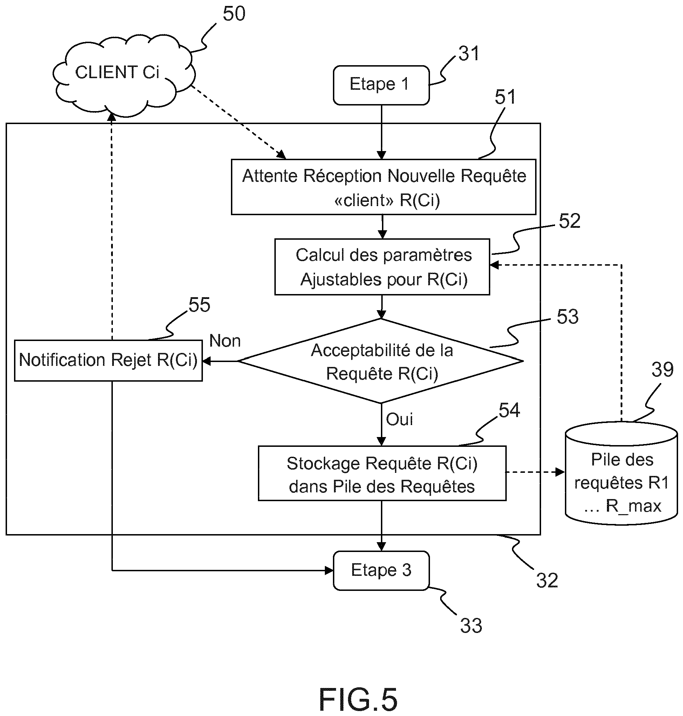

La figure 5 illustre les sous-étapes possibles pour cette deuxième étape 32. Une première sous-étape 51 consiste à récupérer une nouvelle requête R(Ci) venant d'un client Ci 50.

La requête est prise en charge dans une deuxième sous-étape 52 si le système sait la gérer dans le temps imparti, c'est-à-dire si le temps de calcul nécessaire $T_{service(S(i),param(i,1),...,param(i,kj),...,param(i,Np(i)))}$ pour traiter la requête est compatible du temps de réponse objectif Tobj(i), après application des règles d'exécution de la première étape 31 du procédé.

En ce qui concerne la robustesse, si la pile 39 des requêtes est pleine, une notification de rejet avec le statut 'Pile pleine' est effectuée.

Dans une alternative, le procédé détermine à nouveau dynamiquement les ajustements de paramètres de toutes les requêtes présentes dans la pile, à chaque réception de nouvelle requête. Cela dégrade la QoS des services déjà présents dans la pile, et le processus de détermination dynamique pour chaque service s'arrête lorsque le service atteint sa butée en temps de réponse.

Dans une alternative « multi-ressources » (c'est-à-dire multiprocesseurs), cette tâche de répartition est exécutée sur une des ressources, qui répartit les requêtes sur différentes ressources, en fonction de la charge desdites ressources. Ainsi si une ressource i est occupée à traiter des requêtes, et qu'elle ne peut absorber une nouvelle requête dans sa pile sans garantie de réponse dans les temps impartis, le superviseur s'adresse à une ressource j moins chargée (si elle existe).

Dans une troisième sous-étape 53, le résultat de la deuxième sous-étape 52 est aiguillé :

- soit vers la pile des requêtes via une sous-étape 54 ;

- soit vers une sous-étape 55 de notification de rejet, lorsque par exemple l'échéance demandée par le nouveau client n'est pas compatible de la durée cumulée des traitements déjà présents et acceptés dans la pile.

Cette sous étape 55 est un service protocolaire avec le client pour renvoyer un statut 'Refus' de sa requête Ri et éventuellement un sous-statut (traitement trop long, pile peine par exemple) selon les règles « R1 », « R2 » ou « R3 » de la première étape 31 du procédé. Dans le cas « R3 », ce n'est pas un statut de refus qui est envoyé, mais une estimation du temps nécessaire pour répondre au client.

L'autre sous-étape 54 envoie une demande d'écriture vers la « pile des requêtes ».

Elle écrit donc dans la pile notamment :

- le service S(i) à exécuter ;

- les paramètres param(i,ki) à ajuster et les valeurs d'ajustement desdits paramètres.

Dans l'alternative multi-ressource, la pile peut être gérée uniquement par la ressource qui supervise l'ensemble des requêtes. Avantageusement, une recopie locale de la pile 39 sur toutes les ressources, ou une mise en commun de la pile 39 entre les ressources peut être effectuée pour éviter les problèmes de robustesse, par exemple un cas de ressource de supervision qui tombe en panne.

On revient à la figure 3 qui présente les étapes possible du procédé selon l'invention. Dans une troisième étape 33, le traitement des requêtes de la pile 39 est effectué. Dans cette troisième étape 33 on exécute, pour chaque ressource, les différentes requêtes de la pile 39 des requêtes. Cette étape 33 peut être interrompue à tout moment par la deuxième étape 32 si un client souhaite intégrer une nouvelle requête.

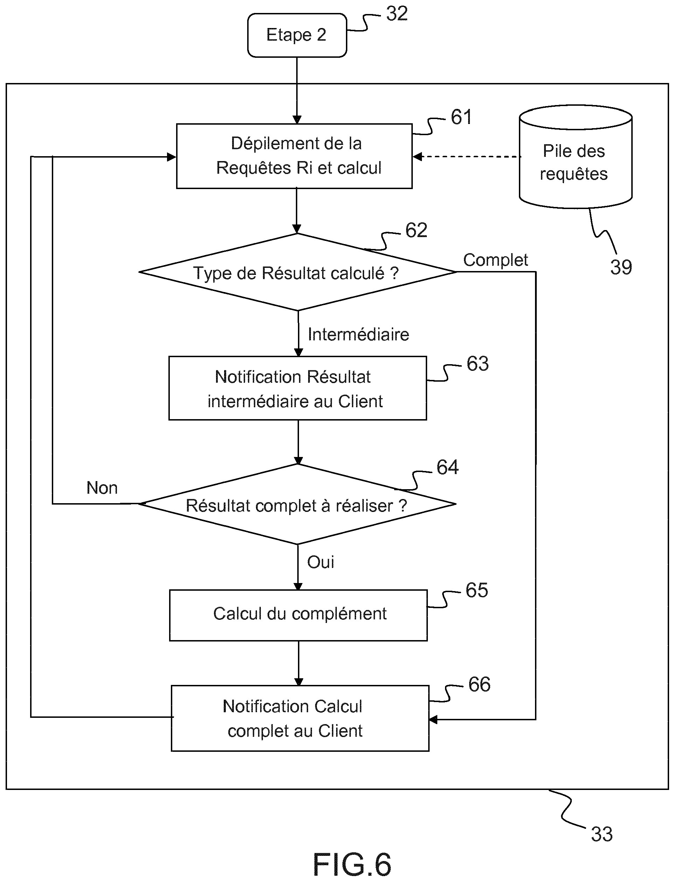

La figure 6 illustre les sous-étapes possibles pour la mise en oeuvre de cette troisième étape 33 du procédé selon l'invention.

Dans une première sous-étape 61, le procédé vérifie d'abord si une requête est empilée dans la pile des requêtes 39. Si c'est le cas, cette requête devient la nouvelle requête à exécuter. Si ce n'est pas le cas, le procédé met cette étape 61 en attente. Cette même sous-étape 61 effectue le calcul du service S(i) correspondant en utilisant les paramètres ajustés de la sous-étape 55 de la deuxième étape 32 du procédé.

Une comparaison est effectuée dans une deuxième sous-étape 62. Plus précisément on compare la précision et la fiabilité calculée dans la première sous-étape 61 avec l'objectif de précision et de fiabilité, la dégradation étant connue via la table des paramètres :

- si le calcul a pu être effectué jusqu'à son terme, sans ajustement des paramètres, le calcul est dit « complet » et le client est notifié du résultat via une sous-étape 66 ;
- dans le cas contraire, le calcul est dit « intermédiaire », et le client est notifié via une sous-étape 63.

Cette sous-étape 63 est suivie d'une sous-étape 64 où on détermine si un complément de calcul est nécessaire :

- si l'objectif de précision et de fiabilité demandé par le client est atteint, le calcul est considéré comme terminé et le procédé retourne à la première sous-étape 61 pour entamer le calcul suivant à partir de la requête qui à exécution dans la pile 39, ou en attente s'il n'y pas de requête empilée dans la pile ;
- si l'objectif de précision et de fiabilité n'est pas atteint, le calcul complet est lancé dans une sous-étape suivante 65. Ce calcul est effectué sur une tâche éventuellement de priorité temps réel plus faible qui peut être repoussée dans le temps pour laisser s'effectuer les calculs plus prioritaires présents dans la pile.

Cette sous-étape 65 est suivie de la sous-étape 66 de notification de calcul complet au client.

Dans un autre mode de mise en oeuvre possible, le calcul complet est lancé dans la foulée, avant les calculs restant à effectuer dans la pile, pour finir de répondre au client.

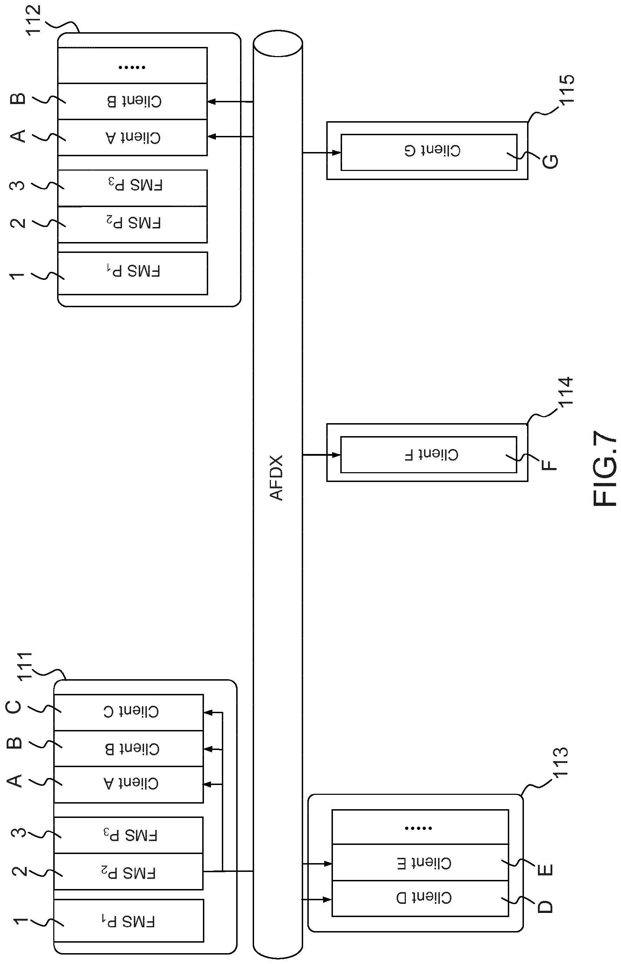

La figure 7 présente un exemple de représentation physique des clients dans le cas d'application à un système FMS, du type notamment de celui décrit dans en regard de la figure 1. Le serveur est une application de gestion de vol. Le système comporte par exemple deux modules physiques 111, 112 formant les ressources physiques comportant notamment chacun un serveur. Dans cet exemple, le serveur est une application de gestion de vol.

Le système étant redondé, les deux ressources physiques réalisent les mêmes fonctions. Les clients identifiés et connus 1, 2, 3 sont hébergés dans les modules physiques 111, 112, modules physiques du FMS. Les clients externes, non identifiés au préalable, peuvent être des applications soit hébergées dans les modules physiques 111, 112 hébergeant le serveur, soit des applications réparties dans l'avion dans d'autres modules physiques 113, 114, 115. Dans l'exemple de la figure 7, trois clients externes A, B, C sont hébergés dans le module physique 111, et 2 clients externes A et B sont hébergés dans le module physique 112. A cet effet, les clients A, B, C disposent par exemple de RAM internes aux modules comme ressources physiques, les codes applicatifs des clients A, B, C étant copiés dans les RAM internes au module auquel ils sont connectés (111 pour A,B,C et 112 pour A,B). D'autres clients externes D, E, F, G communiquent avec les modules physiques par une liaison AFDX, l'accès se faisant par les protocoles standardisés, ARINC 653, dans l'exemple de la figure 7. Les clients peuvent êtres parmi les applications suivantes :

- une IHM (Interface Homme-Machine), une IHS (Interface Homme Système) intégrée, un AID (Agent d'Interaction Domaine)
- une CMU (Communication Management Unit)
- un TCAS (Traffic Collision Avoidance System)
- un TAWS (Terrain Avoidance Warning System)
- un WIMS (Weather Information Management System) ou un WxR (Weather Radar)
- un EFB (Electronic Flight Bag)
- une tablette
- un FQMS (Fuel Quantity Management System)
- un PA (Pilote Automatique)
- un FWS (Flight Warning System)
- une IFE (In Flight Entertainment),

ces applications ayant été présentées lors de la description du système FMS de la figure 1. D'autres applications clientes sont bien sûr possibles.

Trois grandes familles de services peuvent être définies pour classer l'ensemble des services d'un FMS selon la norme AEEC ARINC 702A.

Une première famille comporte les services de consultation de données géographiques 130 (navigation data & dynamic magnetic variation), permettant aux clients de rechercher des informations géographiques ou de déclinaison magnétique sur un point du globe. Pour cette famille, les paramètres ajustables peuvent être les suivants :

- le nombre d'éléments retournés ;

- le type d'éléments prioritaires (balises, aéroports, points de passage ...) ;

- l'espace de recherche (surface ou volume de recherche autour d'un élément) ;

- les pays de recherche par filtrage des codes OACI (Organisation de l'aviation civile internationale).

Une deuxième famille comporte les services de consultation des performances de l'avion (aircraft characteristic & performances) faisant intervenir les fonctions de trajectoire latérale 120 et de prédiction 140 et la base de données de performances 150, cette famille étant notamment composée :

    o des bornes caractéristiques de l'avion (ex : masses min et max, plafond d'altitude certifié ...), des vitesses de décollage et atterrissage (dites vitesses caractéristiques), des calculs d'enveloppe de vol (vitesses max, vitesses de décrochage, roulis max ...) ;

        ■ les paramètres ajustables étant notamment la précision du calcul et le nombre d'itérations ;

    o des calculs d'intégration selon des modes avions choisis (montée de X pieds à poussée constante, descente à pente air déterminée et vitesse figée, virage à angle imposé ...), calculs de forfaits (pour certains FMS, des calculs de performance simplifiés peuvent être définis dans la base de données des performances 150, là où la précision requise est plus faible) ;

        ■ les paramètres ajustables étant notamment :

          • les tailles de pas d'intégration ;

          • le nombre d'itérations ;

          • le calcul ou non des transitions en virages sur la trajectoire latérale ;

          • le test ou non des limites d'enveloppe de vol (saturation) ;

          • le format des flottants ;

          • la linéarisation des fonctions majoritairement utilisées (fonctions trigonométriques par exemple).

Une troisième famille comporte les services « gestion du vol » (flight management) :

    o consultation de l'état de l'avion (position, vitesse, états des systèmes connectés au FMS, comme l'état moteurs, les modes engagés au pilote automatique, etc ...

        ■ les paramètres ajustables étant notamment le nombre de paramètres ;

    o consultation et modification de plan de vol et de trajectoire 5D ;

        ■ les paramètres ajustables étant les mêmes que pour les services de consultation des performances de l'avion ;

    o consultation et modification des données d'initialisation du vol (saisie des vitesses de décollage, de l'altitude de croisière, de la météo prévue, des modes de consommation carburant...) ;

        ■ les paramètres ajustables étant les mêmes que pour les services de consultation des performances de l'avion.

Le procédé s'applique par exemple dans les cas où le serveur est une application parmi les applications suivantes :

-    un FMS
-    une IHM, une IHS intégrée, un AID
-    une CMU
-    un TCAS
-    un TAWS
-    un WIMS ou un WxR
-    un EFB
-    une tablette
-    un FQMS
-    un PA
-    un FWS
-    une IFE
-    une application de roulage.

Ces applications ont été présentées lors de la description du système FMS de la figure 1. A ces application, on peut ajouter une application est une application de roulage (TAXI). Les clients peuvent être une quelconques des applications précédentes autre que le serveur, ainsi que tout autre application.

L'invention s'applique également pour un dispositif FMS où le serveur est une application parmi :

-    la base de données de navigation NAV DB, 130 ;

-    la base de données de performance PRF DB, 150 ;

-    la fonction de vol FPLN, 110 ;

-    la fonction de trajectoire latérale TRAJ, 120 ;

-    la fonction de prédiction PRED, 140 ;

-    la fonction de guidage GUID, 200 ;

-    la fonction de localisation LOC NAV, 170 ;

-    la liaison de données numériques DATA LINK, 180 ;

-    l'interface homme-machine IHM.

Les clients peuvent être une quelconque des ces applications autre que le serveur, ainsi que tout application. L'invention a notamment comme avantages qu'elle permet, via la création de calculs intermédiaires à paramètres ajustés :

- de minimiser le taux de refus de requêtes clients ;
- d'allouer du temps de calcul à des clients tiers, même minime, de manière garantie ;
- de pouvoir toujours donner une réponse préalable d'acceptation ou de refus de prise en charge d'une requête, accompagnée d'un statut sur la précision et la fiabilité qui découlera du calcul.

L'invention a encore comme avantage qu'elle permet, via la notion de règles d'exécution, d'obtenir un bon compromis entre la souplesse laissée au client pour gérer ses requêtes et les performances en temps de calcul du serveur. Le procédé selon l'invention permet également avantageusement à un client d'avoir un retour sur le temps nécessaire pour effectuer un calcul lorsqu'il a figé un certain nombre de paramètres à préserver et qu'il a figé les ajustements pour les paramètres à ajuster.

**Revendications**

1.  Procédé d'exécution temps réel de services par une application dite « serveur » pour au moins une application dite « client », **caractérisé en ce qu'**une étape préliminaire (30) établissant pour chaque service, S(i), une liste de paramètres de calcul, Param (i, j), aptes à varier dans un domaine donné, dits ajustables, ainsi que des informations de temps de calcul et de qualité dudit service selon la valeur desdits paramètres, sur requête (51) d'un client (50) pour un service donné ledit procédé ajuste (52) la valeur des paramètres de calcul ajustables en fonction d'une contrainte donnée, le service étant exécuté (33) en utilisant les valeurs ajustées desdits paramètres.

2.  Procédé selon la revendication 1, **caractérisé en ce que** ladite contrainte donnée implique une durée maximale de temps de réponse à ladite requête.

3.  Procédé selon l'une quelconque des revendications précédentes, **caractérisé en ce que** ladite contrainte donnée implique l'utilisation d'un jeu de paramètres de calcul non ajustables.

4.  Procédé selon l'une quelconque des revendications précédentes, **caractérisé en ce que** ladite contrainte est fournie au serveur par ledit client.

5.  Procédé selon l'une quelconque des revendications précédentes, **caractérisé en ce que**, pour chaque service, S(i), les paramètres ajustables sont classés par priorité, P(i, kp), en cas d'ajustement nécessaire des paramètres pour répondre à ladite contrainte donnée :

> - le paramètre de priorité la plus élevée, P(i, k1), est d'abord ajusté et le temps d'exécution dudit service étant calculé ;
> - si l'ajustement dudit paramètre de priorité la plus élevée, P(i, k1), ne permet pas de répondre à la contrainte donnée, même en butée de son domaine de variation, le paramètre de priorité suivante, P(i, k2), est ajusté, la valeur du paramètre de priorité la plus élevée, P(i, k1), restant figée en butée de son domaine de variation ;

et ainsi de suite, par ordre de priorité, P(i, kp), jusqu'à répondre à la contrainte ou jusqu'à ce que tous les paramètres ajustables aient été mis en butée dans leur domaine de variation respectifs.

6.  Procédé selon l'une quelconque des revendications 1 à 4, **caractérisé en ce que**, pour chaque service, S(i), les paramètres ajustables sont classés par priorité, P(i, kp), en cas d'ajustement nécessaire des paramètres pour répondre à ladite contrainte donnée :

> - le paramètre de priorité la plus élevée, P(i, k1), est d'abord ajusté jusqu'à une première valeur cible, V_cible (i, k1), à l'intérieur de son domaine de variation et le temps d'exécution dudit service étant calculé ;
> - si l'ajustement dudit paramètre de priorité la plus élevée, P(i, k1), ne permet pas de répondre à la contrainte donnée, même en butée de ladite première valeur cible, V_cible (i, k1), le paramètre de priorité suivante, (P(i, k2), est ajusté jusqu'à une deuxième valeur cible, V_cible (i, k2), à l'intérieur de son domaine de variation, la valeur du paramètre de priorité la plus élevée, P(i, k1), restant figée en butée de la première valeur cible, V_cible (i,k1);

et ainsi de suite, par ordre de priorité, P(i, kp), jusqu'à répondre à la contrainte ou jusqu'à ce que tous les paramètres ajustables aient été mis en butée, si l'ajustement n'est pas suffisant après avoir atteint toutes les valeurs cibles, V_cible (i, kp), en butée, de nouvelles valeurs cibles internes aux domaines de variations desdits paramètres étant définies.

7.  Procédé selon l'une quelconque des revendications 5 ou 6, **caractérisé en ce que** les paramètres d'un sous-ensemble de ladite liste sont d'abord ajustés.

8.  Procédé selon l'une quelconque des revendications précédentes, **caractérisé en ce que** ladite liste des paramètres ajustables est établie par ledit client.

9. Procédé selon l'une quelconque des revendications précédentes, **caractérisé en ce que** lesdits domaines de variation desdits paramètres sont déterminés par ledit client.

10. Procédé selon l'une quelconque des revendications précédentes, **caractérisé en ce qu'**au moins un résultat intermédiaire d'exécution dudit service est calculé avec sa qualité se service.

11. Procédé selon la revendication 10, **caractérisé en ce que** ledit résultat intermédiaire est notifié (63) audit client.

12. Procédé selon l'une quelconque des revendications 10 ou 11, **caractérisé en ce que** l'exécution complète (65) dudit service est effectuée après ledit calcul intermédiaire.

13. Procédé selon l'une quelconque des revendications 10 ou 11, **caractérisé en ce que** plusieurs résultats intermédiaires successifs sont calculés, avec des paramètres de moins en moins ajustés à chaque calcul, jusqu'au calcul complet d'exécution dudit service sans ajustement desdits paramètres, un paramètre de moins en moins ajusté étant un paramètre dont la valeur s'éloigne de plus en plus de la valeur permettant de répondre à ladite contrainte donnée.

14. Procédé selon l'une quelconque des revendications précédentes, **caractérisé en ce que** les paramètres de ladite liste sont ajustés à chaque réception de nouvelle requête (51).

15. Procédé selon l'une quelconque des revendications précédentes, **caractérisé en ce que** l'exécution de ladite requête est refusée (55) si son exécution avec lesdits paramètres ajustables ne permet pas de répondre à ladite contrainte donnée.

16. Procédé selon l'une quelconque des revendications précédentes, **caractérisé en ce qu'**une information est transmise audit client si l'exécution de ladite requête avec lesdits paramètres ajustables ne permet pas de répondre à ladite contrainte donnée.

17. Système temps réel mettant en oeuvre le procédé selon l'une quelconque des revendications précédentes, comportant au moins un module physique (111) où est implanté le serveur, **caractérisé en ce que** les clients sont des applications externes implantées dans ledit module physique, lesdits clients communiquant avec le serveur via une mémoire interne au module.

18. Système selon la revendication 17, **caractérisé en ce que** les clients sont des applications externes réparties dans d'autres modules physiques (113, 114, 115) et communiquant avec le serveur via un protocole réseau.

19. Système selon l'une quelconque des revendications 17 ou 18, **caractérisé en ce que** le serveur est une application de gestion de vol.

20. Système selon la revendication 19, **caractérisé en ce que** les clients appartiennent la liste des applications suivantes :

   - une IHM (Interface Homme Machine) ;
   - une IHS (Interface Homme Système) ;
   - un AID (Aircraft Interface Device) ;
   - une CMU (Communication Interface Device)
   - un TCAS (Traffic Collision Avoidance System)
   - un TAWS (Terrain Awareness and Warning System)
   - un WIMS (Weather Information Management System)
   - un WxR (Weather Radar)
   - un EFB (Electronic Flight Bag)
   - un FQMS (Fuel Quantity Management System)
   - un PA (Pilote Automatique)
   - un FWS (Flight Warning System)
   - une IFE (In Flight Entertainment)
   - une application de roulage.

**Patentansprüche**

1. Verfahren zur Ausführung von Diensten in Echtzeit durch eine Anwendung bezeichnet als "Server" für mindestens eine Anwendung bezeichnet als "Client", **dadurch gekennzeichnet, dass** eine Vorstufe (30) für jeden Service, S(i), eine Liste von Berechnungsparametern, Param (i, j), die innerhalb eines gegebenen Bereichs variieren können, und als einstellbar bezeichnet werden, sowie Berechnungszeitinformationen und Qualitätsinformationen des Service gemäß dem Wert der Parameter festlegt, auf Anforderung (51) von einem Client (50) für einen gegebenen Service stellt das Verfahren (52) den Wert von einstellbaren Berechnungsparametern in Abhängigkeit einer erteilten Vorgabe ein, wobei der Service unter Verwendung der eingestellten Werte der Parameter ausgeführt (33) wird.

2. Verfahren nach Anspruch 1, **dadurch gekennzeichnet, dass** die erteilte Vorgabe eine maximale Zeitdauer der Antwort auf die Anforderung einschließt.

3. Verfahren nach einem der vorherigen Ansprüche, **dadurch gekennzeichnet, dass** die erteilte Vorgabe die Verwendung eines Satzes von nicht einstellbaren Berechnungsparametern einschließt.

4. Verfahren nach einem der vorherigen Ansprüche, **dadurch gekennzeichnet, dass** die erteilte Vorgabe vom Client zum Server geliefert wird.

5. Verfahren nach einem der vorherigen Ansprüche, **dadurch gekennzeichnet, dass** für jeden Service, S(i), die einstellbaren Parameter nach Priorität klassifiziert werden, P(i, kp), wenn eine Einstellung von Parametern notwendig ist, um der erteilten Vorgabe zu entsprechen:

    - der Parameter mit höchster Priorität, P(i, k1), wird zuerst eingestellt und die Ausführungszeit des Service wird berechnet;
    - wenn die Einstellung des Parameters mit höchster Priorität, P(i, k1), nicht erlaubt, der erteilten Vorgabe zu entsprechen, auch nicht an der Grenze seines Variationsbereichs, wird der Parameter der nächsten Priorität, P(i, k2), eingestellt, wobei der Parameter mit höchster Priorität, P(i, k1), fest an der Grenze seines Variationsbereichs bleibt;

und so weiter nach Prioritätsordnung, P(i, kp), bis der Vorgabe entsprochen wird, oder bis alle einstellbaren Parameter an die Grenze ihres jeweiligen Variationsbereichs gebracht wurden.

6. Verfahren nach einem der Ansprüche 1 ä 4, **dadurch gekennzeichnet, dass** für jeden Service, S(i), die einstellbaren Parameter nach Priorität klassifiziert werden, P(i, kp), wenn eine Einstellung von Parametern notwendig ist, um der erteilten Vorgabe zu entsprechen:

    - der Parameter mit höchster Priorität, P(i, k1), wird zuerst bis zu einem ersten Zielwert, V_Ziel (i, k1), innerhalb seines Variationsbereichs eingestellt und die Ausführungszeit des Service wird berechnet;
    - wenn die Einstellung des Parameters mit höchster Priorität, P(i, k1), nicht erlaubt, der erteilten Vorgabe zu entsprechen, auch nicht an der Grenze des ersten Zielwerts, V_Ziel (i, k1), wird der Parameter der nächsten Priorität, (P(i, k2), bis zu einem zweiten Zielwert, V_Ziel (i, k2), innerhalb seines Variationsbereichs eingestellt, wobei der Parameter mit höchster Priorität, P(i, k1), fest an der Grenze des ersten Zielwerts, V_Ziel (i, k1) bleibt;

und so weiter nach Prioritätsordnung, P(i, kp), bis der Vorgabe entsprochen wird, oder bis alle einstellbaren Parameter an die Grenze gebracht wurden, wenn die Einstellung nicht ausreichend ist, nachdem alle Zielwerte, V_Ziel (i, kp), an der Grenze sind, werden neue interne Zielwerte in den Variationsbereichen der Parameter definiert.

7. Verfahren nach einem der Ansprüche 5 oder 6, **dadurch gekennzeichnet, dass** die Parameter einer Untereinheit der Liste zuerst eingestellt werden.

8. Verfahren nach einem der vorherigen Ansprüche, **dadurch gekennzeichnet, dass** die Liste der einstellbaren Parameter vom Client festgelegt wird.

9. Verfahren nach einem der vorherigen Ansprüche, **dadurch gekennzeichnet, dass** die Variationsbereiche der Parameter vom Client bestimmt werden.

10. Verfahren nach einem der vorherigen Ansprüche, **dadurch gekennzeichnet, dass** mindestens ein Zwischenresultat der Ausführung des Service mit seiner Servicequalität berechnet wird.

11. Verfahren nach Anspruch 10, **dadurch gekennzeichnet, dass** das Zwischenresultat dem Client mitgeteilt wird (63).

12. Verfahren nach einem der Ansprüche 10 oder 11, **dadurch gekennzeichnet, dass** die komplette Ausführung (65) des Service nach der Zwischenberechnung durchgeführt wird.

13. Verfahren nach einem der Ansprüche 10 oder 11, **dadurch gekennzeichnet, dass** mehrere aufeinanderfolgende Zwischenresultate berechnet werden, wobei die Parameter bei jeder Berechnung abwärts eingestellt werden, bis zur vollständigen Berechnung der Ausführung des Service ohne Einstellung der Parameter, wobei ein abwärts eingestellter Parameter ein Parameter ist, dessen Wert sich immer von dem Wert entfernt, der erlaubt, der erteilten Vorgabe zu entsprechen.

14. Verfahren nach einem der vorherigen Ansprüche, **dadurch gekennzeichnet, dass** die Parameter der Liste bei jedem Empfang einer neuen Anforderung angepasst werden (51).

15. Verfahren nach einem der vorherigen Ansprüche, **dadurch gekennzeichnet, dass** die Ausführung der Anforderung abgelehnt wird (55), wenn ihre Ausführung mit den einstellbaren Parametern nicht erlaubt, der erteilten Vorgabe zu entsprechen.

16. Verfahren nach einem der vorherigen Ansprüche, **dadurch gekennzeichnet, dass** eine Information an den Client übertragen wird, wenn die Ausführung der Anforderung mit den einstellbaren Parametern nicht erlaubt, der erteilten Vorgabe zu entsprechen.

17. Echtzeitsystem zur Umsetzung des Verfahrens nach einem der vorherigen Ansprüche, umfassend mindestens ein physikalisches Modul (111), in dem der Server implementiert ist, **dadurch gekennzeichnet,**

**dass** die Clients externe Anwendungen sind, die im physikalischen Modul implementiert sind und mit dem Server über einen internen Speicher des Moduls kommunizieren.

18. System nach Anspruch 17, **dadurch gekennzeichnet, dass** die Clients externe Anwendungen sind, die auf andere physikalische Module (113, 114, 115) verteilt sind und mit dem Server über ein Netzwerkprotokoll kommunizieren.

19. System nach einem der Ansprüche 17 oder 18, **dadurch gekennzeichnet, dass** der Server eine Flugmanagementanwendung ist.

20. System nach Anspruch 19, **dadurch gekennzeichnet, dass** die Clients zur Liste der folgenden Anwendungen gehören:

> - eine IHM (Schnittstelle Mensch-Maschine) ;
> - eine IHS (Schnittstelle Mensch-System) ;
> - ein AID (Aircraft Interface Device) ;
> - eine CMU (Communication Interface Device)
> - ein TCAS (Traffic Collision Avoidance System)
> - ein TAWS (Terrain Awareness and Warming System)
> - ein WIMS (Weather Information Management System)
> - ein WxR (Weather Radar)
> - ein EFB (Electronic Flight Bag)
> - ein FQMS (Fuel Quantity Management System)
> - ein PA (Automatischer Pilot)
> - ein FWS (Flight Warning System)
> - ein IFE (In Flight Entertainment)
> - eine Beförderungsanwendung.

**Claims**

1. Method for executing services in real time by means of an application called "server" for at least one application called "client", **characterised in that**, a preliminary step (30) establishing for each service S(i) a list of calculation parameters Param (i, j) which are capable of varying within a specific range and which are called adjustable, and information relating to calculation time and quality of service in accordance with the value of the parameters, at the request (51) of a client (50) for a specific service, the method adjusts (52) the value of the adjustable calculation parameters in accordance with a specific constraint, the service being executed (33) using the adjusted values of the parameters.

2. Method according to claim 1, **characterised in that** the specific constraint involves a maximum period of time for responding to the request.

3. Method according to either of the preceding claims, **characterised in that** the specific constraint involves the use of a set of calculation parameters which are non-adjustable.

4. Method according to any one of the preceding claims, **characterised in that** the constraint is supplied to the server by the client.

5. Method according to any one of the preceding claims, **characterised in that**, for each service S(i), the adjustable parameters are classified by priority P(i, kp), in the case of necessary adjustment of the parameters in order to comply with the specific constraint:

> - the parameter with the highest priority P(i, k1) is first adjusted and the execution time for the service being calculated;
> - if the adjustment of the parameter with the highest priority, P(i, k1) does not allow the specific constraint to be complied with, even at the limit of the variation range thereof, the parameter with the following priority, P(i, k2) is adjusted, the value of the parameter with the highest priority P(i, k1) remaining fixed at the limit of the variation range thereof;

and so on, in order of priority, P(i, kp) until the constraint has been complied with or until all the adjustable parameters have been set at the limit in their respective variation ranges thereof.

6. Method according to any one of claims 1 to 4, **characterised in that**, for each service, S(i), the adjustable parameters are classified by priority P(i, kp), in the case of necessary adjustment of the parameters in order to comply with the specific constraint:

> - the parameter with the highest priority, P(i, k1) is first adjusted to a first target value V_cible (i, k1) within the variation range thereof and with the time for executing the service being calculated;
> - if the adjustment of the parameter with the highest priority P(i, k1) does not enable the specific constraint to be complied with, even at the limit of the first target value V_cible (i, k1), the parameter with the following priority (P(i, k2) is adjusted to a second target value V_cible (i, k2) within the variation range thereof, the value of the parameter with the highest priority P(i, k1) remaining fixed at the limit of the first target value V_cible (i, k1);

and so on, in order of priority, P(i, kp) until the constraint has been complied with or until all the adjustable parameters have been set at the limit, if the adjustment is not sufficient after having reached all the target values, V_cible (i, kp), at the limit, new target values within the variation ranges of the parameters being defined.

7. Method according to either claim 5 or claim 6, **characterised in that** the parameters of a sub-set of the list are first adjusted.

8. Method according to any one of the preceding claims, **characterised in that** the list of adjustable parameters is established by the client.

9. Method according to any one of the preceding claims, **characterised in that** the variation ranges of the parameters are determined by the client.

10. Method according to any one of the preceding claims, **characterised in that** at least one intermediate result for executing the service is calculated with the service quality thereof.

11. Method according to claim 10, **characterised in that** the intermediate result is notified (63) to the client.

12. Method according to either claim 10 or claim 11, **characterised in that** the complete execution (65) of the service is carried out after the intermediate calculation.

13. Method according to either claim 10 or claim 11, **characterised in that** several successive intermediate results are calculated, with parameters which are adjusted less and less with each calculation, until the complete calculation of execution of the service without adjustment of the parameters, a parameter which is less and less adjusted being a parameter whose value is increasingly distant from the value which allows the specific constraint to be complied with.

14. Method according to any one of the preceding claims, **characterised in that** the parameters of the list are adjusted each time a new request (51) is received.

15. Method according to any one of the preceding claims, **characterised in that** the execution of the request is refused (55) if the execution thereof with the adjustable parameters does not allow the specific constraint to be complied with.

16. Method according to any one of the preceding claims, **characterised in that** an item of information is transmitted to the client if the execution of the request with the adjustable parameters does not allow the specific constraint to be complied with.

17. Real time system which implements the method according to any one of the preceding claims, comprising at least one physical module (111) in which the server is installed, **characterised in that** the clients are external applications which are installed in the physical module, the clients communicating with the server via a memory which is internal with respect to the module.

18. System according to claim 17, **characterised in that** the clients are external applications which are distributed in other physical modules (113, 114, 115) and which communicate with the server via a network protocol.

19. System according to either claim 17 or 18, **characterised in that** the server is a flight management application.

20. System according to claim 19, **characterised in that** the clients belong to the list of following applications:

- an MMI (Man Machine Interface);
- an MSI (Man System Interface);
- an AID (Aircraft Interface Device);
- a CMU (Communication Interface Device)
- a TCAS (Traffic Collision Avoidance System)
- a TAWS (Terrain Awareness and Warning System)
- a WIMS (Weather Information Management System)
- a WxR (Weather Radar)
- an EFB (Electronic Flight Bag)
- an FQMS (Fuel Quantity Management System)
- an AP (Automatic Pilot)
- an FWS (Flight Warning System)
- an IFE (In Flight Entertainment)
- a taxiing application.

FIG.1

FIG.2a

FIG.2b

Etablissement des paramètres ajustables
et de leurs domaines d'usage — 30

Chargement des paramètres ajustables
Init de la pile — 31

Traitement des requêtes client entrantes avec
détermination des paramètres ajustables — 32

— 39
Pile des
requêtes R1
...R_max

33 — Traitement des requêtes
de la pile

**FIG.3**

Initialisation de la pile à 0 — 41

Chargement des tables de paramètres ajustables — 42

Détermination des règles d'exécution
pour ajuster les paramètres — 43

— 31

**FIG.4**

FIG.5

FIG.6

FIG.7

**EP 2 991 274 B1**

## RÉFÉRENCES CITÉES DANS LA DESCRIPTION

### Documents brevets cités dans la description

• FR 2920236 A1